(19) **Europäisches Patentamt European Patent Office Office européen des brevets**

(11) **EP 4 601 185 A2**

(12) **EUROPEAN PATENT APPLICATION**

(43) Date of publication:
**13.08.2025 Bulletin 2025/33**

(21) Application number: **25181386.1**

(22) Date of filing: **06.06.2025**

(51) International Patent Classification (IPC):
**H02P 21/13** (2006.01)       **H02P 21/14** (2016.01)

(52) Cooperative Patent Classification (CPC):
**H02P 21/141; H02P 21/13**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(71) Applicants:
• **Volvo Car Corporation**
  **405 31 Göteborg (SE)**
• **Politecnico Di Torino**
  **10129 Torino (IT)**

(72) Inventors:
• **Diana, Michela**
  **SE-405 31 Göteborg (SE)**
• **Pescetto, Paolo**
  **10129 Torino (IT)**
• **Pellegrino, Gianmario**
  **10129 Torino (IT)**
• **Chen, Chen**
  **10129 Torino (IT)**

(74) Representative: **Nederlandsch Octrooibureau**
**P.O. Box 29720**
**2502 LS The Hague (NL)**

(54) **CONTROLLING THE MAGNETIZATION STATE OF A VARIABLE FLUX MACHINE**

(57)     A control method for maintaining torque during magnetization state variation transition using a direct flux vector control module. Particularly, the method comprising: determining, by the DFVC module, a stator reference voltage in a $d_s q_s$ frame ( $v^*_{dqs}$ ) from an estimated flux amplitude ($\hat{\lambda}$), a reference flux amplitude ($\lambda^*$), a measured stator current $i_{\alpha\beta}$ in an $\alpha\beta$ frame, a stator reference current in the $d_s q_s$ frame ( $i^*_{qs}$ ), and an estimated stator flux angle $\hat{\theta}_s$; driving the VFM with the determined stator reference voltage in a $d_s q_s$ frame ( $v^*_{dqs}$ ); deriving a stator current in the $\alpha\beta$ frame ($i_{\alpha\beta}$) from measured 3-phase stator currents $i_{123}$; determining, by a flux observer, the estimated flux amplitude ($\hat{\lambda}$), the estimated stator flux angle ($\hat{\theta}_s$) and an estimated magnetization state ( $\widehat{MS}$ ) from the measured stator current in the $\alpha\beta$ frame ($i_{\alpha\beta}$), a stator reference voltage in $\alpha\beta$ frame ( $v^*_{\alpha\beta}$ ) and the phase angle ($\theta$); and determining the reference flux amplitude ($\lambda^*$) from a reference torque (T*) and a reference magnetization state (MS*); wherein the magnetization state (MS) is adjusted such that the torque (T) is maintained.

FIG. 2

EP 4 601 185 A2

**Description**

**TECHNICAL FIELD**

The present disclosure relates to a method and apparatus for controlling a Variable Flux Machine (VFM) using a direct flux vector control (DFVC) module.

**BACKGROUND ART**

Variable Flux Machines (VFMs) are Permanent Magnet Synchronous Motors (PMSMs) embedding low-coercivity magnets (e.g. rare earth element (REE)-free - AlNiCo or FeN magnets) characterized by the possibility of regulating the Magnetization State (MS) of the permanent magnets (PMs) through the inverter for flux weakening and efficiency optimization strategies. The demagnetization and remagnetization of the permanent magnets (PMs) are obtained through controlled current or flux pulses and permit extending the operating area of the machine in the torque vs speed plane and improving the efficiency at partial load. However, such relevant pulses produce undesired torque perturbations during the magnetization state transition, leading to abrupt torque discontinuity and possible loss of control of the drive. As an example, in the case of VFM drives applied to electrical traction the torque discontinuity would be felt by the vehicle passengers as an uncontrolled speed bump.

Currently, there are three main solutions for controlling the magnetization state control of VFMs:

The first solution suggests interrupting the torque, e.g. by controlling zero current, then forcing a current pulse in the direction of PM magnetization and then restore the torque. However, this solution has the drawback of requiring a discontinuity in the torque.

The second solution suggests that, under a loaded condition, a dedicated current pulse is imposed by combined control of d- and q-axes. In this case, the optimal current trajectory (i.e. the direction and amplitude of the current pulse) is non-trivial to be estimated, normally leading to abrupt torque transients during a MS manipulation.

The third solution suggests using deep modifications of a torque control strategy during the MS manipulation. These solutions lead to relevant issues in control calibration and implementation, thereby not guaranteeing a smooth torque transition.

In these three solutions, the duration of the current pulse should be minimized in order to limit the undesired speed variations due to the uncontrolled torque transient.

**SUMMARY**

In a first aspect of the present disclosure, a method for controlling a Variable Flux Machine (VFM) using a direct flux vector control (DFVC) module is provided. The method comprising: determining, by the DFVC module, a stator reference voltage in a $d_s q_s$ frame ($v^*_{dqs}$) from an estimated flux amplitude ($\hat{\lambda}$), a reference flux amplitude ($\lambda^*$), a measured stator current $i_{\alpha\beta}$ in an $\alpha\beta$ frame, a stator reference current in the $d_s q_s$ frame ($i^*_{qs}$), and an estimated stator flux angle $\hat{\theta}_s$; driving the VFM with the determined stator reference voltage in a $d_s q_s$ frame ($v^*_{dqs}$); deriving a stator current in the $\alpha\beta$ frame ($i_{\alpha\beta}$) from measured 3-phase stator currents $i_{123}$; determining, by a flux observer, the estimated flux amplitude ($\hat{\lambda}$), the estimated stator flux angle $\hat{\theta}_s$ and an estimated magnetization state ($\widehat{MS}$) from the measured stator current in the $\alpha\beta$ frame ($i_{\alpha\beta}$), a stator reference voltage in $\alpha\beta$ frame ($v^*_{\alpha\beta}$) and a rotor phase angle ($\theta$); and determining the reference flux amplitude ($\lambda^*$) from a reference torque ($T^*$) and a reference magnetization state ($MS^*$); wherein the reference flux amplitude ($\lambda^*$) and the stator reference current in the $d_s q_s$ frame ($i^*_{qs}$) are adjusted such that torque ($T$) is maintained equal to the reference torque ($T^*$) during a change in the reference magnetization state ($MS^*$).

The invention is based on a modified Direct Flux Vector Control (DFVC) method which inherently regulates the magnetization state (MS) with seamless torque transient and no modification of the torque control. That is, a simple control scheme is provided ensuring smooth torque transient during the MS manipulation. Moreover, as the torque control is maintained during MS manipulation, the necessity for targeting a fast MS manipulation transient is avoided or minimalized. That is, when a reference magnetization state ($MS^*$) is changed, for example, by an external orchestrator block according to a maximum efficiency and/or a maximum peak performance strategy, a torque ($T$) is maintained equal to a reference torque ($T^*$).

Performance advantages: (1) Parameter independent smooth torque control during MS regulation; and (2) High control bandwidth during the MS manipulation transient guaranteed by the flux controller. For example, flux observers can guarantee high bandwidth due to their ability to quickly and accurately estimate the magnetic flux in motors thanks to the combination of a current model and voltage model. At high speeds, the voltage model becomes more dominant, providing accurate flux estimation due to the significant back electromotive force in the motor, thereby helping in maintaining high bandwidth and precise control. Other flux observers can also be used.

Further, this method enables the widespread use of rare earth element (REE)-free VFMs, thereby reducing costs and environmental impact with similar manufacturing complexity.

According to an embodiment, determining the reference flux amplitude ($\lambda^*$) from the reference torque ($T^*$), actual angular frequency ($\omega$) and the reference magnetization state ($MS^*$) comprises receiving the reference torque ($T^*$); receiving the reference magnetization state ($MS^*$) and determining the reference flux amplitude ($\lambda^*$) based on the reference torque ($T^*$) and the reference magnetization state ($MS^*$) by using lookup tables (LUTs).

According to an embodiment, the lookup tables (LUTs) comprise a remagnetization LUT and a demagnetization LUT.

According to an embodiment, the remagnetization LUT is determined based on the following method, at a given speed, comprising the steps of: defining a test grid having multiple pairs of a first component $i_d$ and a second component $i_q$ of a rotor current $i_{dq}$ in a first quadrant in which the first component $i_d$ and the second component $i_q$ are both positive; for each pair of the multiple pairs: demagnetizing a permanent magnet by imposing a sufficiently large current in both the first component $i_d$ and the second component $i_q$ capable to reach a near zero magnetization state; partially remagnetizing the PM by imposing the current in at least one of the first component $i_d$ and the second component $i_q$ in the first quadrant; driving the partially remagnetized PM to zero current; measuring the MS based on a ratio between an electromotive force measured when the partially remagnetized PM is driven to zero current and a preliminarily calculated reference electromotive force when the PM is fully remagnetized, creating a magnetization map indicating a MS for each pair of the multiple pairs; calculating per each MS and each pair of the multiple pairs, a flux amplitude and torque; and creating the remagnetization LUT based on the calculated MS, the calculated flux amplitude and the calculated torque per each pair of the multiple pairs. Optionally, the imposed current in at least one of the first component $i_d$ and the second component $i_q$ in the first quadrant, is maintained during at least a portion of an electrical period.

According to an embodiment, the demagnetization LUT is determined based on the following method, at a given speed, comprising the steps of: defining a test grid having multiple pairs of a first component $i_d$ and a second component $i_q$ of a rotor current $i_{dq}$ in the second quadrant; for each pair of the multiple pairs: partially demagnetizing the PM by increasing the current in at least one of the first component $i_d$ and the second component $i_q$ in the second quadrant, ; driving the partially demagnetized PM to zero current; obtaining a MS based on a ratio between an electromotive force measured when the partially magnetized PM is driven to zero current and a reference electromotive force when the PM is fully remagnetized, creating a demagnetization map indicating a MS for each pair of the multiple pairs; calculating per each MS and each pair of the multiple pairs, a flux amplitude and torque; and creating the demagnetization LUT based on the calculated MS, the calculated flux amplitude and the calculated torque per each pair of the multiple pairs. Optionally, the imposed current in at least one of the first component $i_d$ and the second component $i_q$ in the second quadrant, is maintained during at least a portion of an electrical period.

According to an embodiment, determining, by a flux observer, the estimated flux amplitude ($\hat{\lambda}$), the estimated stator flux angle ($\hat{\theta}_s$) and an estimated magnetization state ($\widehat{MS}$) from the measured stator current in the $\alpha\beta$ frame ($i_{\alpha\beta}$), the stator reference voltage in $\alpha\beta$ frame ($v^*_{\alpha\beta}$) and the rotor phase angle ($\theta$) comprises: determining an estimated flux vector in the $dq$ frame ($\hat{\lambda}_{dq}$) from the stator reference voltage in $\alpha\beta$ frame ($v^*_{\alpha\beta}$) and the measured stator current in the $\alpha\beta$ frame ($i_{\alpha\beta}$); transform the estimated flux vector in the $\alpha\beta$ frame ($\hat{\lambda}_{\alpha\beta}$) to the $dq$ frame $\hat{\lambda}_{dq}$; determining the estimated flux amplitude ($\hat{\lambda}$) and the estimated stator flux angle $\hat{\theta}_s$ from the estimated flux vector in the $\alpha\beta$ frame ($\hat{\lambda}_{\alpha\beta}$); and determine the estimated magnetization state ($\widehat{MS}$) from the estimated flux vector in the $dq$ frame ($\hat{\lambda}_{dq}$) and the measured stator current in the $dq$ frame ($i_{dq}$).

According to an embodiment, determine the estimated magnetization state ($\widehat{MS}$) from the estimated flux vector in the $dq$ frame ($\hat{\lambda}_{dq}$) and the measured stator current in the $dq$ frame ($i_{\alpha\beta}$) further comprises: determining the estimated magnetization state ($\widehat{MS}$) from a d component of the measured stator current in the $dq$ frame ($i_{dq}$) and a d component of the estimated flux vector in the $dq$ frame ($\hat{\lambda}_{dq}$).

In a second aspect of the present disclosure, a computer-readable storage medium is provided.

In a third aspect of the present disclosure, a Variable Flux Machine (VFM) is provided. The VFM comprises an annular stator having a winding; a rotor concentric to the stator, the rotor comprising at least two magnetized adjustable permanent magnets, i.e., low-coercivity magnets.

## BRIEF DESCRIPTION OF DRAWINGS

The present disclosure will be described in more detail below, with reference to preferred embodiments as shown in the drawings attached, in which:

FIG. 1 shows reference frames used in the description;

FIG. 2 shows an example of a block diagram of a torque control based on a Direct Flux Vector Control (DFVC) strategy;

FIG. 3 shows an example of a block diagram of a flux observer module;

FIG. 4A shows a method for creating a remagnetization LUT;

FIG. 4B shows a method for creating a demagnetization LUT;

FIG. 5A shows an example of a graphical representation of a remagnetization LUT;

FIG. 5B shows an example of a graphical representation of a demagnetization LUT;

FIG. 6 shows an example of two 3D LUTs; and

FIG. 7 shows an MS estimation map.

## DESCRIPTION OF EMBODIMENTS

The aspects of the present disclosure will now be described more fully hereinafter with reference to the accompanying drawings, in which certain embodiments of the disclosure are shown. The use of the same reference numerals may indicate similar or identical items. Various embodiments may utilize elements and/or components other than those illustrated in the drawings, and some elements and/or components may not be present in various embodiments. Elements and/or components in the figures are not necessarily drawn to scale. Throughout this disclosure, depending on the context, singular and plural terminology may be used interchangeably.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present disclosure, and similarly, a second element may be referred to as a first element.

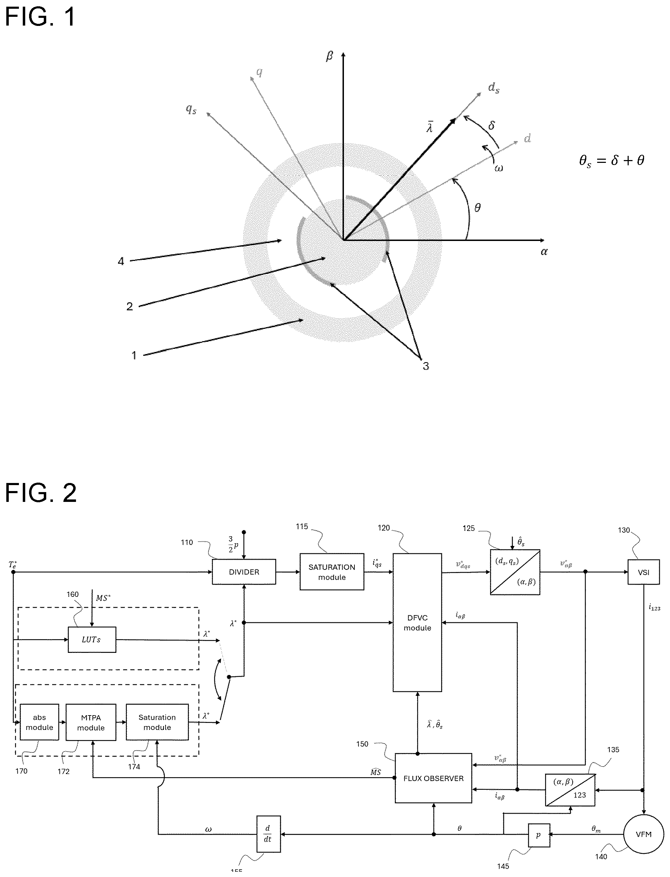

For purposes of better explanation FIG. 1 shows the different reference frames used in the description, namely, the stationary reference frame $(\alpha, \beta)$, the rotor flux frame $(d, q)$ and the stator flux frame $(d_s, q_s)$. The $d$, $d_s$ are known as the direct component of corresponding frame and $q$, $q_s$ are known as the quadrature component of corresponding frame.

Generally, a VFM includes a stator 1 and a rotor 2 surrounded by the stator 1. The rotor 2 includes a number of low-coercivity permanent magnets (PMs) 3, each of the PMs having magnetic north and south poles, i.e. a pole pair. Optionally, an air gap 4 between the stator 1 and the rotor 2 is present. The stator 1, corresponding to the stationary part, produces a magnetic field when supplied with an alternating current (AC), while the rotor 2, which rotates within this magnetic field, generates a torque.

The stationary reference frame $(\alpha, \beta)$ represents an orthogonal coordinate frame fixed to the stator in which the $\alpha$-axis is directed to the stator phase-A-axis. Hereinafter, the stationary reference frame $(\alpha, \beta)$ can also be called the $\alpha\beta$ frame. In the $\alpha\beta$ frame, a rotor voltage vector is represented as $v_{\alpha\beta}$, a rotor flux vector is represented as $\lambda_{\alpha\beta}$, and a rotor current vector is represented as $i_{\alpha\beta}$. Their respective $\alpha$ and $\beta$ components can be represented as $X_\alpha$ and $X_\beta$ wherein X can be $v$, $i$ or $\lambda$.

The rotor flux frame $(d, q)$ represents a rotating coordinate frame that rotates along with the rotor at an angular speed $\omega$ (in rad/s) defined by an rotor phase angle $\theta$. Hereinafter, rotor flux frame $(d, q)$ can also be called the $dq$ frame. In the $dq$ frame, a rotor voltage vector is represented as $v_{dq}$, a rotor flux vector is represented as $\lambda_{dq}$, and a rotor current vector is represented as $i_{dq}$. Their respective d and q components can be represented as $X_d$ and $X_q$ wherein X can be $v$, $i$ or $\lambda$.

The electrical angular speed $\omega$ and the rotor phase angle $\theta$ can be obtained by using a measured angular speed $\omega_m$ and a measured rotor angular position $\theta_m$, respectively, such that $\omega = \omega_m \cdot p$ and $\theta = \theta_m \cdot p$, with $p$ being the pole pair numbers. These measurements, the measured angular speed $\omega_m$ and the measured rotor angular position $\theta_m$, can be directly measured in the rotor through different sensors and techniques.

The stator flux linkage frame $(d_s, q_s)$ represents a coordinate frame that is rotated from the rotor flux frame $(d, q)$ by

a load angle ($\delta$). Hereinafter, the stator flux linkage frame ($d_s$, $q_s$) can also be called the $d_sq_s$ frame. In the $d_sq_s$ frame, a stator voltage vector is represented as $v_{dqs}$, a stator current vector is represented as $i_{dqs}$, and a stator flux vector is represented as $\lambda_{dqs}$. Their respective $d_s$ and $q_s$ components can be represented as $X_{ds}$ and $X_{qs}$ wherein X can be $v$, $i$ or $\lambda$. In the $d_sq_s$ frame, the $\lambda_{qs} = 0$, consequently, a stator flux amplitude $\lambda$ corresponds to $\lambda_{ds}$, i.e. $\lambda_{ds} = \lambda$. In the stator flux linkage frame ($d_s$, $q_s$), the $d_s$-axis is oriented in the direction of a stator flux vector $\overline{\lambda}$ and the $q_s$-axis is oriented in the direction of torque.

The load angle (also called flux angle) is defined as the angle between the $d_s$-axis of the $d_sq_s$ frame and the $d$-axis of the $dq$ frame.

It should be noted that the $d/d_s$ component and the $q/q_s$ component can also be called the direct component and the quadrature component of the $dq$ frame, and the $d_sq_s$ frame, respectively.

As previously mentioned VFMs are characterized by the possibility of regulating the magnetization state (MS) of the permanent magnets (PMs) through an inverter, which provides a current pulse for demagnetizing and remagnetising the permanent magnets.

The MS is defined as

$$MS = \frac{\lambda_m}{\lambda_{m,max}}$$

[Equation 1]

wherein $\lambda_m$ is the flux contribution at open-circuit conditions due to the PM and $\lambda_{m,max}$ refers to the same flux contribution a maximum PM magnetization conditions.

In a VFM, the magnetization state MS is not continuously varying. That is, the MS changes stepwise during drive operation of the VFM (for example, to discrete values) depending on the torque and speed of the motor, targeting a strategy of maximum efficiency.

In the present disclosure, a Direct Flux Vector Control (DFVC) strategy for regulating the MS is presented. This DFVC strategy allows direct control of the stator flux and torque by manipulation of its controlled variables. The torque control is implemented in the $d_sq_s$ frame in which the stator flux amplitude $\lambda$ and the stator current quadrature component $i_{qs}$ are regulated. By regulating these variables, i.e. the stator flux amplitude $\lambda$ and the stator current quadrature component $i_{qs}$, the MS is regulated. How this regulation is performed is described in detail hereinafter.

FIG. 2 shows an example of a Direct Flux Vector Control (DFVC) system for regulating the MS. In the system of FIG. 2, a reference torque $T_e^*$ is fed to a divider 110 together with a reference stator flux amplitude $\lambda^*$ and 3/2 times the number of pole pairs $p$ of the VFM in order to obtain a reference current $i_{qs}^*$ in the $d_sq_s$ frame.

In the $d_sq_s$ frame, the reference electromagnetic torque $T_e^*$ can be represented as

$$T_e^* = \frac{3}{2} \cdot p \cdot \lambda^* \cdot i_{qs}$$

[Equation 2]

wherein $p$ is the number of pole pairs, $\lambda^*$ is the reference stator flux amplitude and $i_{qs}$ is q component of the stator current in the $d_sq_s$ frame. Thus, for any reference electromagnetic torque $T_e^*$, the q component of the stator reference current in the $d_sq_s$ frame is given by:

$$i_{qs}^* = \frac{T_e^*}{\frac{3}{2}p\lambda^*}$$

[Equation 3]

The quadrature component of the stator reference current in the $d_sq_s$ frame $i_{qs}^*$ is fed into a saturation module 115 before being transmitted to the direct flux vector control (DFVC) module 120. The saturation block 115 limits (or saturates) such quadrature component of the stator reference current in the $d_sq_s$ frame $i_{qs}^*$ at

$$i_{qs}^* \leq \sqrt{i_{max}^2 - i_{ds}^2}$$

[Equation 4]

where $i_{max}$ is the inverter maximum current rating and $i_{ds}$ is the direct component of the stator current in the in the $d_sq_s$ frame. The inverter maximum current rating refers to the maximum current that the voltage source inverter (VSI) can safely control, for example the VSI 130..

The DFVC module 120, from quadrature component of the stator reference current in the $d_sq_s$ frame $i_{qs}^*$, a measured stator current $i_{\alpha\beta}$ in the $\alpha\beta$ frame, an estimated flux amplitude $\hat{\lambda}$ and the reference stator flux amplitude $\lambda^*$, and an estimated stator flux angle $\hat{\theta}_s$ calculates a stator reference voltage vector $v^*_{dqs}$ in the $d_s q_s$ frame.

The stator reference voltage vector $v^*_{dqs}$ in the $d_s q_s$ frame is provided to a coordinate rotation module 125 that transforms the stator reference voltage vector $v^*_{dqs}$ in the $d_s q_s$ frame into a stator reference voltage vector $v^*_{\alpha\beta}$ in the $\alpha\beta$ frame using an estimated stator flux angle $\hat{\theta}_s$.

The stator reference voltage vector $v^*_{\alpha\beta}$ in the $\alpha\beta$ frame is provided to a voltage source inverter (VSI) 130 and a flux observer 150.

The VSI 130 converts the stator reference voltage vector $v^*_{\alpha\beta}$ in the $\alpha\beta$ frame into a VFM supply voltages, ultimately determining the 3-phase stator currents $i_{123}$ of the VFM 140.

The 3-phase stator currents $i_{123}$ flowing into the VFM 140 are measured and fed into a transformation module 135 that transforms the measured 3-phase stator currents $i_{123}$ into a measured stator current vector $i_{\alpha\beta}$ in the $\alpha\beta$ frame.

A measured rotor angle $\theta_m$ is measured at the VFM 140 and provided to the flux observer module 150 as the rotor phase angle $\theta$ by multiplying the measured rotor angle $\theta_m$ by the number of pole pairs $p$ in module 145.

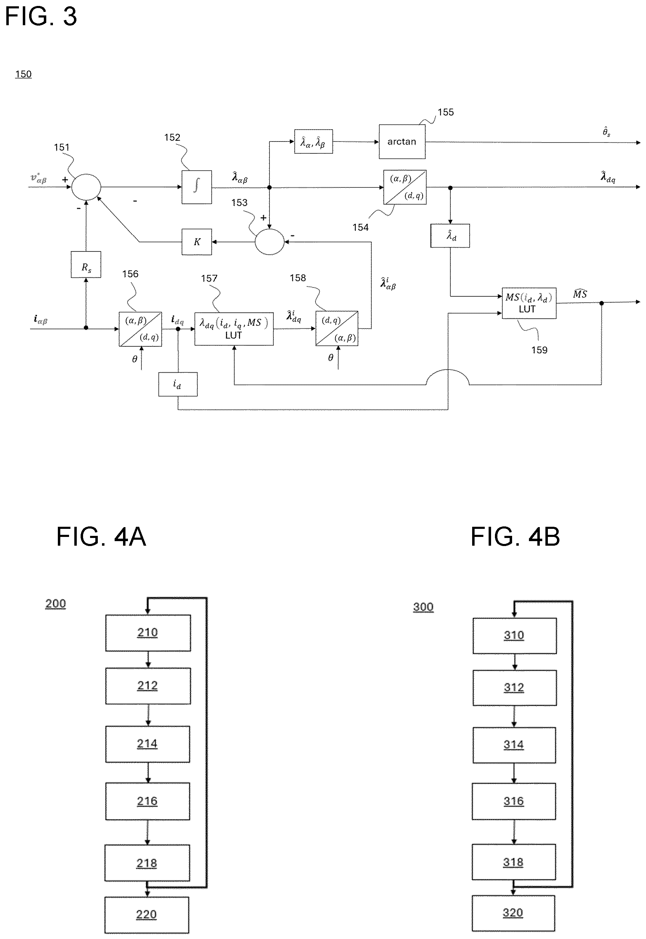

The flux observer module 150 determines, from the measured stator current vector $i_{\alpha\beta}$ in the $\alpha\beta$ frame, the stator reference voltage vector $v^*_{\alpha\beta}$ in the $\alpha\beta$ frame and the rotor phase angle $\theta$, an estimated magnetization state $\widehat{MS}$, an estimated an estimated flux amplitude $\hat{\lambda}$ and the estimated stator flux angle $\hat{\theta}_s$. Detailed description of the flux observer 150 is given in relation to FIG. 3. The flux observer can determine the estimated stator flux angle $\hat{\theta}_s$ through estimated flux in $\alpha\beta$ frame, such as $\hat{\theta}_s = \tan^{-1}(\hat{\lambda}_\beta/\hat{\lambda}_\alpha)$

During MS manipulation operation, the reference stator flux amplitude $\lambda^*$ is obtained by using reference electromagnetic torque $T^*_e$ and reference magnetization state MS* through demagnetization and remagnetization LUTs block 160. The q component of the stator current in the $d_s q_s$ frame $i_{qs}$ are related one to each other by Equation 2 The remagnetization and demagnetization LUTs are tables that correlate a stator flux amplitude to a magnetization state and electromagnetic torque $T_e$. The reference stator flux amplitude $\lambda^*$ is then fed to the divider 110.

During normal operation, the reference electromagnetic torque $T^*_e$ is fed to an absolute (ABS) module 170 for obtaining an absolute value of the reference electromagnetic torque $T^*_e$. The result of the ABS module 170 is provided to a Maximum Torque Per Ampere (MTPA) module 172. The MTPA module 172, from the output of the abs module 170 and the estimated magnetization state $\widehat{MS}$, determines the reference stator flux amplitude $\lambda^*$. The reference stator flux amplitude $\lambda^*$ provided by the MTPA module 172 is provided to a saturation block 174 that saturates the reference stator flux amplitude $\lambda^*$ based on an angular speed $\omega$ to implement a field weakening strategy once the voltage limit of the inverter is reached. This reference stator flux amplitude $\lambda^*$ is fed then to the divider 110. The angular speed $\omega$ is obtained at module 155 from the rotor phase angle $\theta$.

The decision of performing the MS manipulation operation or the normal operation comes from an external orchestrator which decides to change MS according to a maximum efficiency and/or a maximum performance necessity of the vehicle.

The flux observer module 150 is based on a flux observer merging flux estimations obtained from EMF integration (aka voltage model) and flux estimations obtained from flux maps (aka current model) which has been modified to embed an MS estimation. The modification includes implementing 3D flux maps including the MS estimation and adding an estimator of the magnetization state.

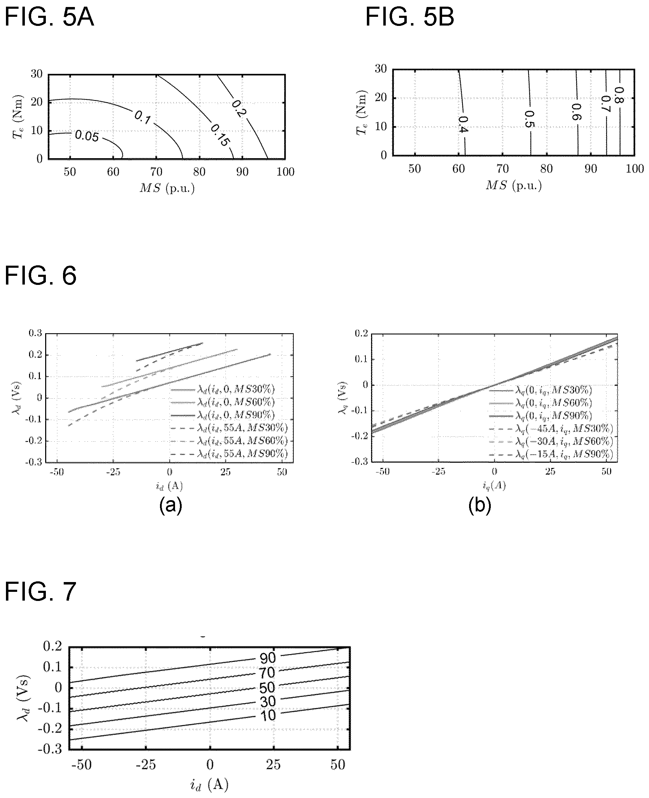

Regarding the implementation of 3D flux maps, these flux maps are implemented in the form of two 3D LUTs, that is, $\lambda_d(i_d, i_q, MS)$ and $\lambda_q(i_d, i_q, MS)$. FIG. 6 shows an example of these two 3D LUTs at three different MS levels. It should be noted that the number of MS levels can vary depending on precision requirements. FIG. 6(a) shows the d axis component of the flux $\lambda_d$ versus the d component of the current $i_d$ at different values of q component of the current $i_q$ and at the different magnetization states of MS = 30%, MS = 60% and MS = 90%. FIG. 6(b) shows the q axis component of the flux $\lambda_q$ versus the q component of the current $i_q$ at different values of the d component of the current $i_d$ and at the different magnetization states of MS = 30%, MS = 60% and MS = 90%.

Regarding the addition of an estimator of the magnetization state. The MS is estimated based on the measured $i_d$ and the observed d-axis flux $\hat{\lambda}_d$, for example, by using an estimation map. An estimation map can be an $MS(i_d, \lambda_d)$ LUT. An example of this estimation map is shown in FIG. 7.

Finally, the estimated stator flux angle $\hat{\theta}_s$ is calculated by

$$\hat{\theta}_s = \tan^{-1}\frac{\hat{\lambda}_\beta}{\hat{\lambda}_\alpha} \qquad\qquad \text{[Equation 5]}$$

FIG. 3 shows an example of a block diagram of the flux observer module 150.

The flux observer module 150 comprises a subtracting module 151 that subtracts from the stator reference voltage vector $\boldsymbol{v}^*_{\alpha\beta}$ in the $\alpha\beta$ frame the measured stator current vector $i_{\alpha\beta}$ in the $\alpha\beta$ frame multiplied by a stator resistance $R_s$ and a flux error multiplied by a feedback gain $K$.

The result of the subtracting module 151 is provided to an integrator 152 in order to provide the estimated flux vector $\hat{\lambda}_{\alpha\beta}$ in the $\alpha\beta$ frame coming from the voltage model. That is, it is an estimated flux vector calculated from the voltage model, in this case, from the stator reference voltage vector $\boldsymbol{v}^*_{\alpha\beta}$ and a measured stator current vector $i_{\alpha\beta}$ in the $\alpha\beta$ frame. That is, the estimated flux vector $\hat{\lambda}_{\alpha\beta}$ in the $\alpha\beta$ frame is estimated through the voltage model, by integrating the voltage $\boldsymbol{v}^*_{\alpha\beta}$ minus the measured stator current vector $i_{dq}$ multiplied by the a stator resistance $R_s$.

The estimated flux vector $\hat{\lambda}_{\alpha\beta}$ in the $\alpha\beta$ frame coming from the voltage model is provided to a subtracting module 153 that subtracts from the estimated flux vector $\hat{\lambda}_{\alpha\beta}$ in the $\alpha\beta$ frame coming from the voltage an estimated flux $\hat{\lambda}^i_{\alpha\beta}$ in the $\alpha\beta$ frame coming from a current model (i.e. through module 158), the result of the subtracting module 153 is the feedback gain K. That is, an error between the estimated flux obtained from the two models is feedback into the subtracting module 151 through the feedback gain K, thereby increasing estimating precision.

The estimated flux vector $\hat{\lambda}_{\alpha\beta}$ in the $\alpha\beta$ frame coming from the voltage model is provided to a transformation module 154 that transforms the estimated flux $\hat{\lambda}_{\alpha\beta}$ in the $\alpha\beta$ frame coming from the voltage model into an estimated flux $\hat{\lambda}_{dq}$ in the *dq* frame.

The estimated flux vector $\hat{\lambda}_{\alpha\beta}$ in the $\alpha\beta$frame is decomposed into its components $\hat{\lambda}_\alpha$ and $\hat{\lambda}_\beta$, in order to determine the estimated stator flux angle $\hat{\theta}_s$ in module 155, for example, by using Equation 5.

The flux observer module 150 comprises a transformation module 156 that transform the measured stator current vector $i_{\alpha\beta}$ in the $\alpha\beta$ frame into a measured stator current $i_{dq}$ in the *dq* frame using the rotor phase angle $\theta$.

The measured stator current vector $i_{dq}$ in the *dq* frame and the estimated magnetization state $\widehat{MS}$ are provided to a module 157 which based on a $\lambda_{dq}(i_d, i_q, MS)$ lookup table (LUT) provides an estimated flux vector $\hat{\lambda}^i_{dq}$ in the *dq* frame coming from the current model. That is, it is an estimated flux vector calculated from a current, in this case, from the stator reference current vector $i_{\alpha\beta}$ in the $\alpha\beta$ frame.

The estimated flux vector $\hat{\lambda}^i_{dq}$ in the *dq* frame coming from the current model is provided to a transformation module 158 that transform said estimated flux vector $\hat{\lambda}^i_{dq}$ in the *dq* frame coming from the current into the estimated flux vector $\hat{\lambda}^i_{\alpha\beta}$ in the $\alpha\beta$ frame coming from the current using the rotor phase angle $\theta$.

The d component $i_d$ of the measured stator current $i_{dq}$ in the *dq* frame and the d component $\hat{\lambda}_d$ of the estimated flux vector $\hat{\lambda}_{dq}$ in the *dq* frame are provided to a module 159 which based on an magnetization state estimation LUT provides the estimated magnetization state $\widehat{MS}$. The magnetization state estimation LUT is a table that correlates a d component of the measured stator current in the *dq* frame $i_d$ to a d component of the estimated flux vector in the *dq* frame $\hat{\lambda}_d$, that is a *MS* $(i_d, \lambda_d)$ LUT. It should be noted that although a magnetization state estimation LUT is used, any other way of estimating the estimated magnetization state $\widehat{MS}$ can be used.

FIG. 4A shows a method 200 for creating a remagnetization LUT. The method 200 is performed at a same given speed imposed by a primer mover to the VFM. In the present disclosure, a primer mover refers to any type of machine that is configured to produce mechanical energy for use in the VFM. Examples of a primer mover include combustion engines, electrical motors, and the like, that can control the rotational speed of a shaft connected to the VFM.

At step 210, a permanent magnet is demagnetized such that the magnetization state of the PM is proximate to zero ($MS \approx 0$). This is achieved by, for example, generating an opposition flux capable of demagnetize the permanent magnet. That is, a sufficiently large stator current vector $i_{dq}$ in a second quadrant of the *dq* frame (where the q component $i_q$ of the measured stator current vector $i_{dq}$ in the *dq* frame is positive and the d component $i_d$ of the measured stator current vector $i_{dq}$ in the *dq* frame is negative) can demagnetize the PM near to zero.

At step 212, both the d component $i_d$ and the q component $i_q$ of the measured stator current vector $i_{dq}$ in the *dq* frame are driven to zero ($i_d = i_q = 0$).

At step 214, the permanent magnet is partially remagnetized by imposing the current in one of the negative d component $i_d$ and the positive q component $i_q$, and maintaining the current of the d component $i_d$ or the q component $i_q$, respectively, for at least a fraction of an electrical time period. This fraction of the electrical time period must be sufficient to remagnetize the permanent magnet into steady state, e.g. to reach a maximum magnetization state. For example, the current can be maintained for a different electrical time period, for example 1/6, 1/4, 1/3 and 2/3, and the like. The fractions 1/3, 1/6 and the like can be used for 3-phase electrical motors, while other values can be used for motors with a different number of phases. In the present disclosure, partially remagnetized means that the permanent magnet is remagnetized between a MS value of 0 (or 0%) and a MS value of 1 (or 100%) excluding those extremes.

At step 216, the partially remagnetized permanent magnet is driven to a zero current. That is, both the d component $i_d$ and the q component $i_q$ of the measured stator current vector $i_{dq}$ in the $dq$ frame are driven to zero ($i_d = i_q = 0$).

At step 218, a magnetization state $MS_{remag}$ is obtained based on a ratio between an electromotive force ($EMF_{remag}$) measured when the partially remagnetized permanent magnet is driven to zero current and an electromotive force ($EMF_{max}$) preliminarily measured with the permanent magnet in fully magnetized conditions as indicated by equation 6.

$$MS_{mag} = \frac{EMF_{remag}}{EMF_{max}}$$

[Equation 6]

After step 218, the steps 210 to 218 are repeated for each test point in the $i_d$, $i_q$ plane, obtaining then a remagnetization map in the $i_d$, $i_q$ plane ($MS_{remag}(i_d, i_q)$).

Then, at step 220, per each MS and each test point in the $i_d$, $i_q$ plane, the flux amplitude $\lambda$ and electromagnetic torque $T_e$ are calculated using the equations 7 and 8, and then reversed to obtain the remagnetization lookup table, i.e. the $\lambda(MS_{remag}, T_e)$ LUT. An example of a graphical representation of a magnetization lookup table is shown in FIG. 5B.

$$\lambda = \sqrt{\lambda_d^2 + \lambda_q^2}$$

[Equation 7]

$$T_e = \frac{3}{2} \cdot p \cdot \left( \lambda_d i_q - \lambda_q i_d \right)$$

[Equation 8]

FIG. 4B shows a method 300 for creating a demagnetization LUT. The method 300 is performed at a same given speed imposed by a primer mover to the VFM.

At step 310, a permanent magnet is fully remagnetized such that the magnetization state of the PM is approximately MS=1 or MS=100%. This can be performed, for example, by injecting a sufficiently large stator current vector $i_{dq}$ in a first quadrant (where the q component $i_q$ and the d component $i_d$ of the measured stator current vector $i_{dq}$ in the $dq$ frame are both positive) to reach maximum magnetization conditions. That is, a larger current would not increase further the magnetization state of the permanent magnet.

At step 312, both the d component $i_d$ and the q component of the measured stator current vector $i_{dq}$ in the $dq$ frame are driven to zero ($i_d = i_q = 0$).

At step 314, the permanent magnet is partially demagnetized by imposing a negative current in one of the d component $i_d$ and a positive q component $i_q$, and maintaining the current of the d component $i_d$ or the q component $i_q$, respectively, for at least a fraction of an electrical time period. This fraction of the electrical time period must be sufficient to demagnetize the permanent magnet into steady state. For example, the current can be maintained for a different electrical time period, for example 1/6, 1/4, 1/3 and 2/3, and the like. The fractions 1/3, 1/6 and the like can be used for 3-phase electrical motors, while other values can be used for motors with a different number of phases. In the present disclosure, partially demagnetized means that the permanent magnet is demagnetized between a MS value of 1 (or 100%) and a MS value of 0 (or 0%) excluding those extremes.

At step 316, the partially demagnetized permanent magnet is driven to zero current. That is, both the d component and the q component of the measured stator current $i_{dq}$ in the $dq$ frame are driven to zero ($i_d = i_q = 0$).

At step 318, a demagnetization state $MS_{demag}$ is obtained based on a ratio between the electromotive force ($EMF_{demag}$) measured when the partially demagnetized permanent magnet is driven to zero current and the reference electromotive force ($EMF_{max}$) measured when the permanent magnet is fully magnetized as indicated by Equation 9.

$$MS_{demag} = \frac{EMF_{demag}}{EMF_{max}}$$

[Equation 9]

After step 318, the steps 310 to 318 are repeated for each test point in the $i_d$, $i_q$ plane, obtaining then a demagnetization map in the $i_d$, $i_q$ plane ($MS_{demag}(i_d, i_q)$).

Then, at step 320, per each MS and each test point in the $i_d$, $i_q$ plane, the flux amplitude $\lambda$ and electromagnetic

torque $T_e$ are calculated using the equations 7 and 8, and then reversed to obtain the demagnetization lookup table, i.e. the $\lambda(MS_{demag}, T_e)$ LUT. An example of a graphical representation of a demagnetization lookup table is shown in FIG. 5A.

Those skilled in the art will appreciate that the methods, systems and components described herein may for instance be implemented in one or several modules comprised in a vehicle and/or one or more separate devices or systems. In that regard, such a module may comprise a control unit or any suitable electronic device, which may be a main or central module. It should also be noted that these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

**Claims**

1. A method for controlling a Variable Flux Machine (VFM) using a direct flux vector control (DFVC) module, the method comprising:

   - determining, by the DFVC module, a stator reference voltage in a $d_s q_s$ frame ($v_{dqs}^*$) from an estimated flux amplitude ($\hat{\lambda}$), a reference flux amplitude ($\lambda^*$), a measured stator current $i_{\alpha\beta}$ in an $\alpha\beta$ frame, a stator reference current in the $d_s q_s$ frame ($i_{qs}^*$), and an estimated stator flux angle $\hat{\theta}_s$;

   - driving the VFM with the determined stator reference voltage in a $d_s q_s$ frame ($v_{dqs}^*$);
   - deriving a stator current in the $\alpha\beta$ frame ($i_{\alpha\beta}$) from measured 3-phase stator currents $i_{123}$;
   - determining, by a flux observer, the estimated flux amplitude ($\hat{\lambda}$), the estimated stator flux angle $\hat{\theta}_s$ and an estimated magnetization state ($\widehat{MS}$) from the measured stator current in the $\alpha\beta$ frame ($i_{\alpha\beta}$), a stator reference voltage in $\alpha\beta$ frame ($v_{\alpha\beta}^*$) and the rotor phase angle ($\theta$); and
   - determining the reference flux amplitude ($\lambda^*$) from a reference torque (T*) and a reference magnetization state (MS*);
   - wherein the reference flux amplitude ($\lambda^*$) and the reference magnetization state (MS*) are adjusted such that the reference torque (T*) is maintained.

2. The method of claim 1, wherein determining the reference flux amplitude ($\lambda^*$) from the reference torque (T*) and the reference magnetization state (MS*) comprises:

   - receiving the reference torque (T*);
   - receiving the reference magnetization state (MS*); and
   - determining the reference flux amplitude ($\lambda^*$) based on the reference torque (T*) and the reference magnetization state (MS*) by using lookup tables (LUT).

3. The method of claim 1, wherein the lookup tables (LUT) comprise a remagnetization LUT and a demagnetization LUT.

4. The method of claim 3, wherein the remagnetization LUT is determined based on the following method, at a given speed, comprising the steps of:

   - defining a test grid having multiple pairs of a first component $i_d$ and a second component $i_q$ of a rotor current $i_{dq}$ in a first quadrant in which the first component $i_d$ and the second component $i_q$ are both positive;
   - for each pair of the multiple pairs:

      ∘ demagnetizing a permanent magnet by imposing a sufficiently large current in both the first component $i_d$

and the second component $i_q$ capable to reach a near zero magnetization state;
◦ partially remagnetizing the PM by imposing the current in at least one of the first component $i_d$ and the second component $i_q$ in the first quadrant; ;
◦ driving the partially remagnetized PM to zero current;
◦ obtaining an MS based on a ratio between an electromotive force measured when the partially remagnetized PM is driven to zero current and a reference electromotive force when the PM is fully magnetized,

- creating a remagnetization map indicating a MS for each pair of the multiple pairs;
- calculating per each MS and each pair of the multiple pairs, a flux amplitude and torque; and
- creating the remagnetization LUT based on the calculated MS, the calculated flux amplitude and the calculated torque for each pair of the multiple pairs.

5. The method of claim 3, wherein the demagnetization LUT is determined based on the following method, at a given speed, comprising the steps of:

- defining a test grid having multiple pairs of a first component $i_d$ and a second component $i_q$ of a rotor current $i_{dq}$ in a second quadrant in which the first component $i_d$ is negative and the second component $i_q$ is positive;
- for each pair of the multiple pairs:

◦ remagnetizing a permanent magnet by imposing a current in both the first component $i_d$ and the second component $i_q$ capable to reach a maximum magnetization state;
◦ partially demagnetizing the PM by imposing the current in at least one of the first component $i_d$ and the second component $i_q$ in the second quadrant;
◦ driving the partially demagnetized PM to zero current;
◦ obtaining an MS based on a ratio between an electromotive force measured when the partially demagnetized PM is driven to zero current and a reference electromotive force when the PM is fully magnetized,

- creating a demagnetization map indicating a MS for each pair of the multiple pairs;
- calculating per each MS and each pair of the multiple pairs, the flux amplitude and torque; and
- creating the demagnetization LUT based on the calculated MS, the calculated flux amplitude and the calculated torque per each pair of the multiple pairs.

6. The method of any preceding claim, wherein determining, by a flux observer, the estimated flux amplitude ($\hat{\lambda}$), the estimated stator flux angle $\hat{\theta}_s$ and an estimated magnetization state ($\widehat{MS}$) from the measured stator current in the $\alpha\beta$ frame ($i_{\alpha\beta}$), the stator reference voltage in $\alpha\beta$ frame ($v_{\alpha\beta}^*$) comprises:

- determining an estimated flux vector in the $\alpha\beta$ frame ($\hat{\lambda}_{\alpha\beta}$) from the stator reference voltage in $\alpha\beta$ frame ($v_{\alpha\beta}^*$) and the measured stator current in the $\alpha\beta$ frame ($i_{\alpha\beta}$);
- determining the estimated flux amplitude ($\hat{\lambda}$) and the estimated stator flux angle $\hat{\theta}_s$ from the estimated flux vector in the $\alpha\beta$ frame ($\hat{\lambda}_{\alpha\beta}$); and
- determine the estimated magnetization state ($\widehat{MS}$) from the estimated flux vector in the $dq$ frame ($\hat{\lambda}_{dq}$) and the measured stator current in the $dq$ frame ($i_{dq}$).

7. The method of claim 6, wherein determine the estimated magnetization state ($\widehat{MS}$) from the estimated flux vector in the $dq$ frame ($\hat{\lambda}_{dq}$) and the measured stator current in the $dq$ frame ($i_{dq}$) further comprises:

- determining the estimated magnetization state ($\widehat{MS}$) from a d component of the measured stator current in the $dq$ frame ($i_{dq}$) and a d component of the estimated flux vector in the $dq$ frame ($\hat{\lambda}_{dq}$).

8. A computer-readable storage medium comprising instructions which, when executed by a processor, cause the processor to carry out the method of any preceding claim.

9. A Variable Flux Machine (VFM) comprising

- an annular stator having a winding;
- a rotor concentric to the stator, the rotor comprising at least two magnetized adjustable permanent magnets, and
- a control unit configured to carry out the method of claim 1-7.

# FIG. 1

$$\theta_s = \delta + \theta$$

# FIG. 2

# FIG. 3

# FIG. 4A

# FIG. 4B

## FIG. 5A

## FIG. 5B

## FIG. 6

(a)

(b)

## FIG. 7